# EUROPÄISCHE PATENTSCHRIFT

(11) **EP 2 844 852 B1**
(45) Veröffentlichungstag und Bekanntmachung des Hinweises auf die Patenterteilung: **23.11.2016**
(21) Anmeldenummer: 13716786.2
(22) Anmeldetag: 16.04.2013
(51) Int. Cl.: H01H 37/00

(54) **VERFAHREN UND VORRICHTUNG ZUR ENTLEERUNG EINER FÖRDEREINHEIT FÜR EIN FLÜSSIGES ADDITIV**
METHOD AND DEVICE FOR EMPTYING A CONVEYOR UNIT FOR A LIQUID ADDITIVE
PROCEDE ET DISPOSITIF DE VIDANGE D'UNE UNITE D'ALIMENTATION D'UN ADDITIF LIQUIDE

(30) Priorität: 19.04.2012 DE 102012103453
(43) Veröffentlichungstag der Anmeldung: 11.03.2015
(73) Patentinhaber: Continental Automotive GmbH, 30165 Hannover (DE)
(72) Erfinder: KRUSE, Carsten, 53842 Troisdorf (DE); NAGEL, Thomas, 51766 Engelskirchen (DE); SCHEPERS, Sven, 53844 Troisdorf (DE); HODGSON, Jan, 53840 Troisdorf (DE)
(86) Internationale Anmeldenummer: PCT/EP2013/057896
(87) Internationale Veröffentlichungsnummer: WO 2013/156475

(56) Entgegenhaltungen:
- DE-A1-102004 054 238
- DE-A1-102006 019 973

## Beschreibung

Die Erfindung betrifft ein Verfahren und eine Vorrichtung zur Entleerung einer Fördereinheit für ein flüssiges Additiv.

Derartige Fördereinheiten werden beispielsweise eingesetzt, um als flüssiges Additiv Harnstoff-Wasser-Lösung in die Abgasbehandlungsvorrichtung einer Verbrennungskraftmaschine zu fördern. Harnstoff-Wasser-Lösung wird in Abgasbehandlungsvorrichtung zur Reinigung der Abgase von Stickstoffoxidverbindungen im Rahmen des SCR-Verfahrens [SCR = selective catalytic reduction] eingesetzt. Typischerweise wird eine 32,5 prozentige Harnstoff-Wasser-Lösung verwendet, die unter dem Handelsnamen AdBlue® erhältlich ist.

Problematisch ist bei solchen Fördereinheiten, dass die flüssigen Additive bei langen Stillstandzeiten der Fördereinheiten einfrieren können. Die beschriebene Harnstoff-Wasser-Lösung friert beispielsweise bei -11 °C ein. Derartig niedrige Temperaturen können insbesondere während langer Stillstandzeiten eines Kraft-fahrzeuges im Winter auftreten.

Insbesondere wasserbasierte flüssige Additive (wie die Harnstoff-Wasser-Lösung) dehnen ihr Volumen beim Einfrieren aus. Dies kann die Fördereinheit beschädigen. Es ist daher aus dem Stand der Technik bekannt, eine Fördereinheit zu entleeren, wenn der Betrieb eines Kraftfahrzeuges beendet wird. Üblicherweise wird das in der Fördereinheit befindliche flüssige Additiv bei der Entleerung zurück in einen Tank gefördert, in welchem das flüssige Additiv gespeichert ist.

Problematisch hierbei ist, dass die Entleerung der Fördereinheit typischerweise zu einer aufwändigen Konfiguration des Systems und/oder einem erhöhten Verbrauch des Additivs führt. Ein erhöhter Verbrauch tritt beispielsweise auf, weil das in der Fördereinheit befindliche flüssige Additiv bei der Entleerung nicht vollständig zurückgewonnen werden kann. Gegebenenfalls verbleibt eine Restmenge des flüssigen Additivs in der Förderleitung. Diese Restmenge kann dort verdunsten. Durch die Entleerung wird auch eine Wiederbefüllung der Fördereinheit bei Wiederinbetriebnahme notwendig. Bei dieser Wiederbefüllung kann ebenfalls ein Verlust an flüssigem Additiv auftreten, beispielsweise, weil bei der Wiederbefüllung ein Überschuss an flüssigem Additiv auftritt, der aus einer Zugabevorrichtung der Fördereinheit austritt.

Gegebenenfalls ist auch eine durch das Entleeren auftretende Abnutzung der Fördereinheit problematisch. Insbesondere eine Pumpe der Fördereinheit kann durch das Entleeren einer erhöhten Abnutzung unterliegen.

Die DE 10 2004 054 238 A1 betrifft ein Dosiersystem zum Dosieren einer Harn-stoff-Wasser-Lösung in eine Abgasbehandlungsvorrichtung, welches beim Betriebsstopp entgegen der Förderrichtung des flüssigen Additivs entleert wird. Die Entleerung erfolgt, um ein Einfrieren von flüssigem Additiv bei niedrigen Außentemperaturen zu vermeiden.

Die DE 10 2006 019 973 A1 betrifft ein Dosiersystem zum Dosieren einer Harnstoff-Wasser-Lösung in ein Abgassystem, bei welchem die Harnstoff-Wasser-Lösung von einem Verdrängungsmedium verdrängt wird, wenn das Dosiersystem deaktiviert wird. Das Verdrängungsmedium ist z. B. ein Gas. Das Verdrängen des flüssigen Additivs durch das Verdrängungsmedium erfolgt, um eine Volumenex-pansion des flüssigen Additivs beim Einfrieren zu kompensieren.

Hiervon ausgehend ist es Aufgabe der vorliegenden Erfindung, die mit dem Stand der Technik geschilderten technischen Probleme zu lösen bzw. zumindest zu lindern. Es soll insbesondere ein besonders geeignetes Verfahren zum Entleeren einer Fördereinheit offenbart werden. Ebenso soll eine einfach aufgebaute und ggf. auch nachrüstbare Vorrichtung zur Realisierung des Verfahrens angegeben werden. Insbesondere sollen Verfahren und/oder Vorrichtung für den Einsatz bei SCR-Abgasnachbehandlungssystemen im Automobilbau geeignet sein.

Diese Aufgaben werden gelöst mit einem Verfahren gemäß den Merkmalen des Patentanspruchs 1 sowie einer Fördereinheit gemäß Patentanspruch 9. Weitere vorteilhafte Ausgestaltungen der Erfindung sind in den abhängig formulierten Patentansprüchen angegeben. Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden.

Die Erfindung betrifft ein Verfahren zum Entleeren einer Fördereinheit für flüssiges Additiv, aufweisend zumindest die folgenden Schritte:
a) Herstellen einer elektrischen Verbindung mit Hilfe eines stromlosen Schalters, der dazu eingerichtet ist, eine elektrische Verbindung herzustellen, wenn eine Temperatur eine Grenztemperatur unterschreitet; und
b) Entleeren der Fördereinheit, wenn in Schritt a) die elektrische Verbindung hergestellt wurde.

Die Fördereinheit, die mit dem beschriebenen Verfahren entleert werden kann, weist vorzugsweise zumindest eine Förderleitung auf, die sich von einem Tank für das flüssige Additiv bis hin zu einer Zufuhrvorrichtung (Düse, Injektor, Ventil oder dergleichen) zur Zufuhr des flüssigen Additivs zu einem Verbraucher (beispielsweise einer Abgasbehandlungsvorrichtung) erstreckt. Die Förderleitung steht an einer Entnahmestelle mit dem Tank in Verbindung, damit flüssiges Additiv aus dem Tank in die Förderleitung eintreten kann. In der Förderleitung ist vorzugsweise eine Pumpe angeordnet, die das flüssige Additiv durch die Förderleitung pumpt. Die Förderleitung und die Pumpe sind während des Förderbetriebs der Fördereinheit mit flüssigem Additiv gefüllt. Die Fördereinheit kann weitere mit flüssigem Additiv gefüllte Komponenten aufweisen.

Das Verfahren wird gerade dann angewendet, wenn die Fördereinheit und/oder das Kraftfahrzeug deaktiviert ist, also z. B. keine Zündung anliegt oder der Motor inaktiv ist. Somit kann das Verfahren z. B. aktiviert werden, wenn das Kraftfahrzeug deaktiviert wird.

Der in Schritt a) verwendete Schalter zeichnet sich vorzugsweise dadurch aus, dass sein Betrieb keinen Strom erfordert, bevor die elektrische Verbindung hergestellt wurde. Vorzugsweise wird in dem Schalter ein mechanischer und/oder ein physikalischer Effekt genutzt, der die elektrische Verbindung herstellt. Als Beispiele für entsprechend nutzbare mechanische und/oder physikalische Effekte können die thermische Ausdehnung eines Materials oder Phasenumwandlungen eines Materials angegeben werden. Der Schalter befindet sich somit vor Schritt a) in einer stromlosen Bereitschaftsstellung. Der Schalter wird in Schritt a) als stromloser Schalter bezeichnet. Hiermit ist insbesondere auch gemeint, dass der Schalter nicht durch eine elektrische Verbindung angesteuert wird. Es existiert insbesondere keine elektrische Ansteuerungsleitung, über welche ein elektrisches Signal zu dem Schalter gelangen kann, um die Stellung des Schalters zu kontrollieren.

Der Schalter ist vorzugsweise so ausgelegt, dass er die elektrische Verbindung herstellt, wenn eine Temperatur in der Umgebung des Schalters eine (untere) Grenztemperatur erreicht oder unterschreitet, wobei diese Grenztemperatur typischerweise oberhalb einer Gefriertemperatur des verwendeten flüssigen Additivs liegt. Die Grenztemperatur ist durch die Konstruktion des Schalters bedingt.

Grundsätzlich kann der Schalter mit der Fördereinheit interagieren und/oder ist Teil der Fördereinheit selbst. Ist die Fördereinheit in ein Kraftfahrzeug integriert, dann kann der Schalter gegebenenfalls auch an einer zur Fördereinheit entfernt angeordneten Position vorgesehen sein. Die Position des Schalters sollte insbesondere so ausgewählt sein, dass mit dem Schalter eine für den aktuellen Aggregatzustand des Additivs charakteristische Information gewonnen oder prognostiziert werden kann. Dazu weist die Fördereinheit insbesondere ein Erkennungsmittel auf, mit dem der aktuelle Zustand des Schalters detektieren werden kann, insbesondere ob dieser stromlos oder bestromt ist. Selbstverständlich kann es auch sinnvoll sein, mehrere solche Schalter vorzusehen, die dann z. B. für unterschiedliche Abschnitte der Fördereinheit Informationen zur Umgebungstemperatur und/oder dem Aggregatzustand des Additivs bereitstellen können. Die mit mehreren Schaltern gewonnenen Informationen können dazu genutzt werden, festzulegen, wann eine teilweise/vollständige Entleerung eingeleitet oder durchgeführt werden soll.

Während des Entleerungsvorgangs in Schritt b) wird zumindest ein (wesentlicher) Teil, bevorzugt aber sämtliches flüssiges Additiv aus den mit flüssigem Additiv gefüllten Komponenten der Fördereinheit (insbesondere in der Pumpe und/oder der Förderleitung) hinaus transportiert. Sinnvoll ist, dass so viel flüssiges Additiv hinaus transportiert wird, dass der gegebenenfalls vorhandene, in der Fördereinheit verbleibende Rest an flüssigem Additiv nicht zu einer Beschädigung der Fördereinheit führen kann, wenn das flüssige Additiv einfriert.

Durch das beschriebene Verfahren ist es nicht notwendig bei jedem Betriebsstopp der Fördereinheit bzw. des Kraftfahrzeugs eine Entleerung durchzuführen. Eine Entleerung kann vielmehr auch im Bedarfsfall durchgeführt werden, wenn ein Einfrieren des flüssigen Additivs aufgrund von niedrigen Außentemperaturen droht. Harnstoff-Wasser-Lösung mit 32,5 Prozent Harnstoff friert beispielsweise bei -11 °C ein. Es ist daher vorteilhaft, wenn die Grenztemperatur des Schalters beispielsweise im Bereich von -7 °C bis -10 °C festgelegt ist, um die Fördereinheit zu entleeren, wenn ein Einfrieren des flüssigen Additivs droht.

Für das beschriebene Verfahren ist keine permanente Stromversorgung (der spezifischen und/oder übergeordneten Steuerung) während des Stillstandes des Kraftfahrzeuges notwendig. Solange nicht entleert wird, tritt durch das beschriebene Verfahren kein (signifikanter) Stromverbrauch auf. Somit wird der Schalter genutzt, die für die Entleerung erforderlichen Komponenten erst dann "aufzuwecken", wenn die vorgegebene Grenztemperatur außen oder in einem temperaturempfindlichen Bereich der Fördereinheit erreicht ist.

Durch das beschriebene Verfahren wird es insbesondere auch möglich, das Ansaugen von Verunreinigungen in die Förderleitung der Fördereinheit zu vermeiden. Während der Entleerung wird das flüssige Additiv vorzugsweise entgegen der Förderrichtung aus der Fördereinheit hinaus zurück in den Tank gefördert.

Dabei wird das flüssige Additiv von Gas bzw. von Luft ersetzt. Vorzugsweise wird das Gas bzw. die Luft beim Entleeren durch eine Zufuhrvorrichtung angesaugt. Wenn die Zufuhrvorrichtung an einer Abgasbehandlungsvorrichtung angeordnet ist, werden gegebenenfalls auch Verunreinigungen aus dem Abgas in die Fördereinheit gesaugt. Dadurch, dass die Entleerung nicht bei jeder Deaktivierung eines Kraftfahrzeuges durchgeführt wird, sondern nur, wenn die vorliegende Temperatur dies tatsächlich notwendig macht, kann das Risiko einer Verunreinigung der Förderleitung durch Verunreinigungen aus dem Abgas erheblich reduziert werden.

Besonders bevorzugt ist das Verfahren, wenn durch den Schalter in Schritt a) ein Steuergerät aktiviert wird, wobei das Steuergerät die Entleerung in Schritt b) steuert.

Vorzugsweise wird durch den Schalter in Schritt a) ein Steuergerät aktiviert, welches den Entleerungsvorgang steuert. Für den Entleerungsvorgang wird beispielsweise eine Pumpe zum Entleeren aktiviert. Gegebenenfalls ist es zusätzlich sinnvoll, Ventile zu öffnen, durch welche dann hindurch entleert wird. Um die Ansteuerung der Pumpe und gegebenenfalls die Ansteuerung von Ventilen zu koordinieren, ist es vorteilhaft, wenn ein Steuergerät verwendet wird, welches diese Koordination durchführt. Das Steuergerät kann beispielsweise auch das Motorsteuergerät eines Kraftfahrzeuges sein, das durch den Schritt a) aktiviert bzw. geweckt wird.

Weiterhin ist das beschriebene Verfahren vorteilhaft, wenn sich das Steuergerät nach der Durchführung des Verfahrens automatisch deaktiviert.

Durch eine automatische Deaktivierung des Steuergerätes nach der Durchführung von Schritt b) kann der Stromverbrauch des Verfahrens weiter reduziert werden. Zur Deaktivierung ist beispielsweise ein Deaktivierungsschalter vorhanden, der (so wie auch der stromlose Schalter) dazu eingerichtet ist, die elektrische Verbindung zu unterbrechen. Im Gegensatz zum stromlosen Schalter wird der Deaktivierungsschalter nicht stromlos temperaturabhängig betätigt, sondern ist über eine Signalleitung von dem Steuergerät selbst ansteuerbar. Der Deaktivierungsschalter wird nur dann betätigt, wenn die Förderleitung bereits (im gewünschten Umfang) entleert ist. Wenn der Deaktivierungsschalter betätigt wurde, ist eine Aktivierung des Steuergerätes mit Hilfe des stromlosen Schalters nicht mehr möglich. Der Deaktivierungsschalter kann auch in dem Steuergerät integriert sein. Mit anderen Worten ausgedrückt, kann das Steuergerät eine (interne) Selbstabschaltung aufweisen, welche das Steuergerät unabhängig von der Stellung des stromlosen Schalters deaktiviert.

Weiterhin ist das Verfahren vorteilhaft, wenn zwischen Schritt a) und Schritt b) mit einem Temperatursensor eine Temperaturmessung durchgeführt wird, um zu überprüfen, ob eine Grenztemperatur tatsächlich unterschritten ist, und das flüssige Additiv aus der Fördereinheit in Schritt b) nur entfernt wird, wenn die Grenztemperatur tatsächlich unterschritten ist.

Um einen Fehler durch eine Fehlauslösung des stromlosen Schalters in Schritt a) zu vermeiden, ist es vorteilhaft, wenn das Steuergerät zusätzlich vor der Einleitung von Schritt b) noch eine Überprüfung der Temperatur mit (mindestens) einem (zusätzlichen und/oder elektrischen) Temperatursensor durchführt, um die Fördereinheit nur zu entleeren, wenn die Grenztemperatur tatsächlich unterschritten ist. Diese (sensorisch gemessene) Grenztemperatur kann von der Grenztemperatur zur Aktivierung des stromlosen Schalters in Schritt a) abweichen, um gegebenenfalls ein unnötiges Entleeren der Fördereinheit in Schritt b) zu vermeiden. Beispielsweise kann eine Grenztemperatur des Schalters so eingestellt sein, dass eine Aktivierung des Steuergerätes bereits bei einer Temperatur von -7 °C erfolgt. Wenn die Temperatur auf -10 °C fällt, kann dann die tatsächliche Entleerung (Schritt b) durchgeführt werden, wobei diese dann von einem am Temperatursensor ermittelten Messergebnis ausgelöst wird. Durch eine solche zusätzliche Überprüfung der Temperatur können Situationen, in denen eine Entleerung der Förderleitung erforderlich ist, besonders zuverlässig erkannt werden. Insbesondere ist es auch möglich, dass die Genauigkeit der Grenztemperatur des stromlosen Schalters geringer ist als die Genauigkeit der Temperaturmessung mit dem zusätzlichen Temperatursensor. Beispielsweise kann die Grenztemperatur eine Unsicherheit von mehr als +/- 3 °C aufweisen, während die Genauigkeit des zusätzlichen Sensors bei unter +/- 1 °C liegt. Durch die zusätzliche Überprüfung kann diese Ungenauigkeit des stromlosen Schalters zumindest teilweise kompensiert werden.

Außerdem ist das Verfahren vorteilhaft, wenn nach Schritt b) in einem Speicher hinterlegt wird, dass die Fördereinheit entleert ist und vor Schritt a) und/oder nach Schritt a) anhand der Information in dem Speicher überprüft wird, ob das System bereits entleert ist und zumindest der Schritt b) nur durchgeführt wird, wenn das System nicht entleert ist.

Dadurch, dass in einem Speicher der vorliegende Zustand der Fördereinheit (entleert oder nicht entleert) hinterlegt wird, kann vermieden werden, dass das beschriebene Verfahren während eines (einzigen) Betriebsstopps mehrmals ausgeführt wird. Insbesondere kann vermieden werden, dass die Fördereinheit durch den Versuch, die bereits entleerte Fördereinheit erneut zu entleeren, beschädigt wird. Die Berücksichtigung eines (elektronischen) Speichers zur Prüfung, ob Schritt b) durchgeführt werden soll, kann alternativ oder zusätzlich zur Deaktivierung des Steuergerätes mit einem Deaktivierungsschalter erfolgen. Die in dem Speicher hinterlegte Information, ob entleert wurde oder nicht, kann insbesondere auch bei einer Wiederinbetriebnahme der Fördereinheit verwendet werden, um gegebenenfalls eine Wiederbefüllung der Fördereinheit vorzunehmen, wenn die Fördereinheit entleert wurde.

Außerdem ist das Verfahren vorteilhaft, wenn die Fördereinheit durch Rücksaugen des flüssigen Additivs zurück in einem Tank entleert wird.

Rücksaugen entgegen einer üblichen Förderrichtung ist eine besonders vorteilhafte Weise, um die Fördereinheit in Schritt b) zu entleeren. Das Rücksaugen ist durch eine (einzelne) Pumpe ermöglicht, die entgegen der üblichen Förderrichtung betrieben werden kann. Gemäß einer weiteren Ausführungsvariante ist es auch möglich, eine Rücklaufleitung vorzusehen, die von der Förderleitung abzweigt, so dass durch eine Kreisförderung entleert wird. Auch ist es möglich, für das Rücksaugen eine separate Pumpe zu verwenden.

Vorzugsweise erfolgt eine Entleerung entgegen einer (üblichen) Förderrichtung der Fördereinheit, wobei die (übliche) Förderrichtung sich von dem Tank zu der Zufuhrvorrichtung entlang einer Förderleitung erstreckt. Die Förderrichtung der Pumpe wird zu diesem Zweck umgekehrt. Je nach Bauart der Pumpe kann dies durch eine Umkehr der Antriebsrichtung der Pumpe oder durch eine geeignete Schaltung von Ventilen erfolgen, welche der Pumpe zugeordnet sind.

Insbesondere beim Rücksaugen besteht die Gefahr, dass Luft durch eine Zufuhrvorrichtung (Injektor, etc.) in die Fördereinheit gesaugt wird. Diese Zufuhrvorrichtung ist dieselbe Zufuhrvorrichtung, die auch verwendet wird, um das flüssige Additiv einem Verbraucher (beispielsweise einer Abgasbehandlungsvorrichtung) zuzuführen. Auch ist möglich, ein zusätzliches Ventil vorzusehen, durch welches beim Entleeren Luft in die Fördereinheit gesaugt werden kann.

Eine weitere Möglichkeit zum Entleeren in Schritt b) ist, die Fördereinheit mit Hilfe von Luft (teilweise) leer zu blasen. Hierfür kann eine Druckluftleitung genutzt werden, die an die Fördereinheit bzw. das Leitungssystem angebunden ist.

Darüber hinaus ist das Verfahren vorteilhaft, wenn der Schalter zumindest ein Schalter aus der folgenden Gruppe ist:
- ein Bimetall-Schalter,
- ein Schalter umfassend eine Formgedächtnislegierung, und
- ein Temperaturschalter mit einer Flüssigkeit,
- ein vorgespannter Schalter.

Bei einem Bimetall-Schalter sind zwei verschiedene Materialien mit unterschiedlichen thermischen Ausdehnungskoeffizienten nebeneinander angeordnet und miteinander verbunden. Durch Temperaturveränderungen verändert sich die Form/Gestalt der Bimetall-Anordnung. Beispielsweise biegt sich die Anordnung. Die Veränderung der Form/Gestalt kann genutzt werden, mechanisch einen Kontakt zu schließen. Hierdurch kann eine elektrische Verbindung geschlossen werden.

Bei einer Formgedächtnislegierung verändert sich die Form eines Bauteils aufgrund eines Phasenwechsels, wodurch die elektrische Verbindung geschlossen werden kann. Als Beispiel für eine Formgedächtnislegierung sei hier eine Nickel-Titan-Legierung angegeben. Auch können Polymermaterialien für den Schalter verwendet werden, die Formgedächtniseigenschaften aufweisen.

Ein Temperaturschalter mit einer Flüssigkeit kann beispielsweise eine mit Flüssigkeit gefüllte Hülse aufweisen. Wenn die Flüssigkeit gefriert, verändert sie ihr Volumen. Diese Volumenveränderung kann genutzt werden, um damit eine elektrische Verbindung zu schließen.

Ein für das beschriebene Verfahren verwendeter (mechanisch) vorgespannter Schalter ist vorzugsweise so aufgebaut, dass er bei Erreichen der Grenztemperatur eine schlagartige Formveränderung ausführt, die einen elektrischen Kontakt herstellt. Ein solcher Schalter kann beispielsweise ein vorgespanntes Ausdehnungsmaterial umfassen (beispielsweise ein mechanisch vorgespanntes Metall), welches sich bis zu der Grenztemperatur in einer ersten Position befindet und welches in eine zweite Position übergeht, wenn die Grenztemperatur erreicht wird. Vorzugsweise befindet sich das Ausdehnungsmaterial dabei in der ersten Position in einer vorgespannten (instabilen) Lage und ist (beispielsweise gegen einen Anschlag) vorgespannt. Bei Überschreiten der Grenztemperatur kann sich das Ausdehnungsmaterial nicht mehr in der ersten Position halten und geht (schlagartig) in eine zweite Position über. Gegebenenfalls kann zusätzlich noch ein Aktuator vorhanden sein, mit welchem der vorgespannte Schalter aktiv wieder in die vorgespannte erste Position versetzt werden kann.

Außerdem ist vorteilhaft, wenn das Verfahren während einer Stillstandphase einer Verbrennungskraftmaschine durchgeführt wird. Besonders vorteilhaft ist in diesem Zusammenhang auch, wenn die Entleerung bzw. die Durchführung von Schritt b) während dem Betrieb einer Verbrennungskraftmaschine (aktiv) verhindert wird.

Während einer Betriebsphase einer Verbrennungskraftmaschine wird die Fördereinheit üblicherweise benötigt, um der Abgasbehandlungsvorrichtung der Verbrennungskraftmaschine das flüssige Additiv zuzuführen, um eine effektive Abgasreinigung zu gewährleisten. Daher sollte die Entleerung vorzugsweise nicht erfolgen. Daher ist es vorteilhaft, wenn der nicht elektronische Schalter während des Betriebs einer Verbrennungskraftmaschine überbrückt und/oder blockiert wird.

Hier wird auch eine Fördereinheit vorgeschlagen, die einen stromlosen Schalter aufweist, wie er für den Schritt a) des beschriebenen Verfahrens verwendet wird. Die für das beschriebene Verfahren dargestellten Vorteile und Ausgestaltungsmerkmale sind in analoger Weise auf die beschriebene Fördereinheit übertragbar. Die Fördereinheit weißt vorzugsweise ein Gehäuse auf, in welchem sich die Pumpe, der Schalter und zumindest ein Abschnitt der Förderleitung befindet. Zusätzlich kann in dem Gehäuse auch ein Steuergerät vorgesehen sein, welches dazu eingerichtet ist, das beschriebene Verfahren durchzuführen. Die Fördereinheit mit dem Schalter stellt eine Komponente dar, die in ein Kraftfahrzeug (insbesondere einen Tank) eingebaut werden kann.

Im Folgenden soll der Ablauf des Verfahrens in einem Kraftfahrzeug beispielhaft beschrieben werden.

Das Kraftfahrzeug wird bei Temperaturen oberhalb des Urea-Gefrierpunktes abgestellt, wobei der Urea-Gefrierpunkt der Gefrierpunkt des flüssigen Additivs ist. Das Steuergerät befindet sich im Ruhezustand (Zündung aus). Sollte das Fahrzeug über einen längeren Zeitraum abgestellt werden, so muss gewährleistet werden, dass ein Mehrfaches Leersaugen (Aktivieren von Pumpe und Injektor) nicht stattfindet. Zwischen zwei Motorstarts kann nur einmal leergesaugt werden. Daher können folgende Maßnahmen ergriffen werden:
a) Über einen Bimetall-Schalter (oder ein anderer mechanisch auszulösender Kontakt / Schalter), der bei ca. -9 °C einen Kontakt schaltet, wird das Steuergerät aktiviert und der Injektor geöffnet und das System leergesaugt. Die Meldung, dass leergesaugt wurde, wird gespeichert und bei einem Neustart des Systems abgerufen, so dass das System weiß, das leergesaugt wurde.
b) Es werden ohne das Steuergerät Pumpe und Injektor aktiviert und die Aktion in eine Art Speicher abgelegt, so dass diese Information bei einem Motorstart abgerufen werden kann.

Dadurch wird ein bedarfsgerechtes Leeren des Systems gewährleistet und das Zurücksaugen findet erst statt, wenn das Abgassystem erkaltet ist und somit auch die Gefahr des Einsaugens von Partikeln minimiert wurde.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und vor allem die in den Figuren dargestellten Größenverhältnisse nur schematisch sind. Es zeigen:
- Fig. 1:: ein Kraftfahrzeug mit einer Fördereinheit, welches zur Durchführung des beschriebenen Verfahrens eingerichtet ist;
- Fig. 2:: eine erste Ausführungsvariante eines stromlosen Schalters;
- Fig. 3:: eine zweite Ausführungsvariante eines stromlosen Schalters; und
- Fig. 4:: eine dritte Ausführungsvariante eines stromlosen Schalters.

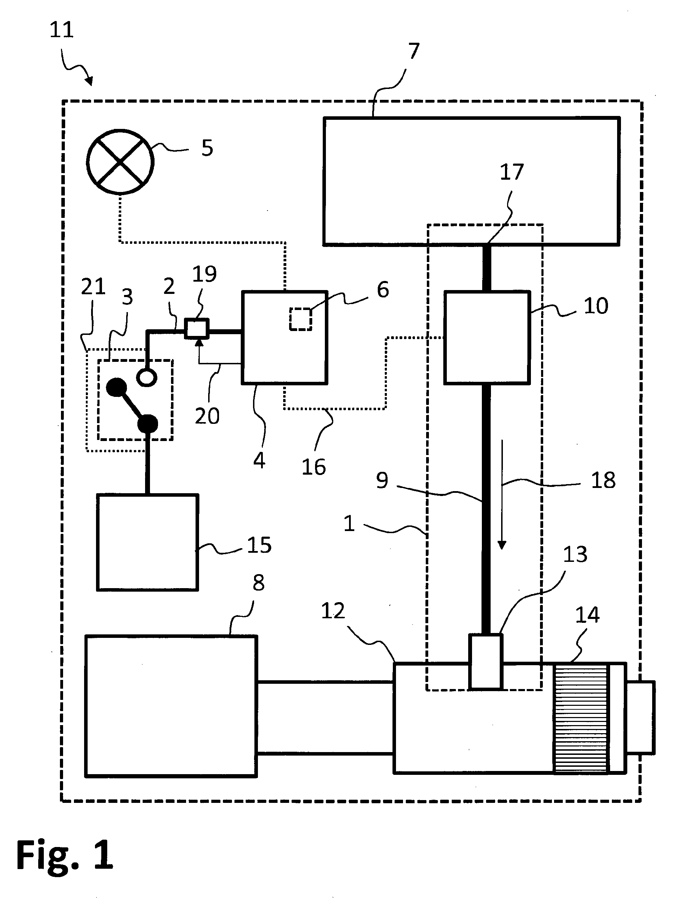

Fig. 1 zeigt ein Kraftfahrzeug 11, aufweisend zumindest eine Verbrennungskraftmaschine 8 und eine Abgasbehandlungsvorrichtung 12 zur Reinigung der Abgase der Verbrennungskraftmaschine 8. In der Abgasbehandlungsvorrichtung 12 ist ein SCR-Katalysator 14 vorgesehen, mit welchem die Abgase aus der Verbrennungskraftmaschine 8 gereinigt werden können. An dem SCR-Katalysator 14 kann unter Zuhilfenahme von flüssigem Additiv (wie Harnstoff-Wasser-Lösung) das Verfahren der selektiven katalytischen Reduktion durchgeführt werden, welches der Abgasbehandlungsvorrichtung 12 mit einer Zufuhrvorrichtung 13 an einer Fördereinheit 1 zugeführt werden kann. Die Zufuhrvorrichtung 13 hat eine Pumpe 10 und eine Förderleitung 9. Die Förderleitung 9 verläuft von einer Entnahmestelle 17 an einem Tank 7 durch die Pumpe 10 hin zu der Zufuhrvorrichtung 13. Die Richtung von dem Tank 7 hin zu der Zufuhrvorrichtung 13 ist mit der Förderrichtung 18 bezeichnet.

Das Kraftfahrzeug 11 weist darüber hinaus ein Steuergerät 4 auf. Mit dem Steuergerät 4 kann eine aktive Entleerung der Förderleitung 9 der Fördereinheit 1 durchgeführt werden. Das Steuergerät 4 wird über eine elektrische Verbindung 2 mit elektrischer Energie und/oder mit elektrischen Signalen von einer Versorgung 15 versorgt. Diese elektrische Verbindung 2 weist einen Schalter 3 auf, der temperaturabhängig betätigt wird. Bei einem Absinken der Temperatur, so dass eine (vorgegebene, untere) Grenztemperatur erreicht wird, schließt der Schalter 3 die elektrische Verbindung 2, um das Steuergerät 4 zu aktivieren. Zusätzlich kann an der elektrischen Verbindung 2 auch noch ein Deaktivierungsschalter 19 vorgesehen sein, den das Steuergerät 4 über eine Deaktivierungsleitung 20 später wieder kontrollieren kann, um eine Deaktivierung des Steuergerätes 4 unabhängig von der Stellung des Schalters 3 zu erreichen. Das Steuergerät 4 kann auch einen (elektrische Daten erfassenden und/oder archivierenden) Speicher 6 aufweisen, in welchem eine Information darüber hinterlegt ist, ob die Fördereinheit 1 entleert ist oder nicht. Das Steuergerät 4 ist über eine Signalleitung 16 mit der Pumpe 10 verbunden, um die Pumpe 10 zu steuern. Es ist außerdem vorteilhaft, wenn der Schalter 3 während des Betriebs einer Verbrennungskraftmaschine 8 mit Hilfe einer Überbrückung 21 überbrückt und/oder blockiert werden kann. Das Kraftfahrzeug 11 hat vorzugsweise auch noch einen Temperatursensor 5, der an das Steuergerät 4 angeschlossen ist und mit dem das Steuergerät 4 die vorliegende Temperatur eigenständig überwachen kann, um zu prüfen, ob die Entleerung der Fördereinheit 1 tatsächlich durchgeführt werden soll oder nicht.

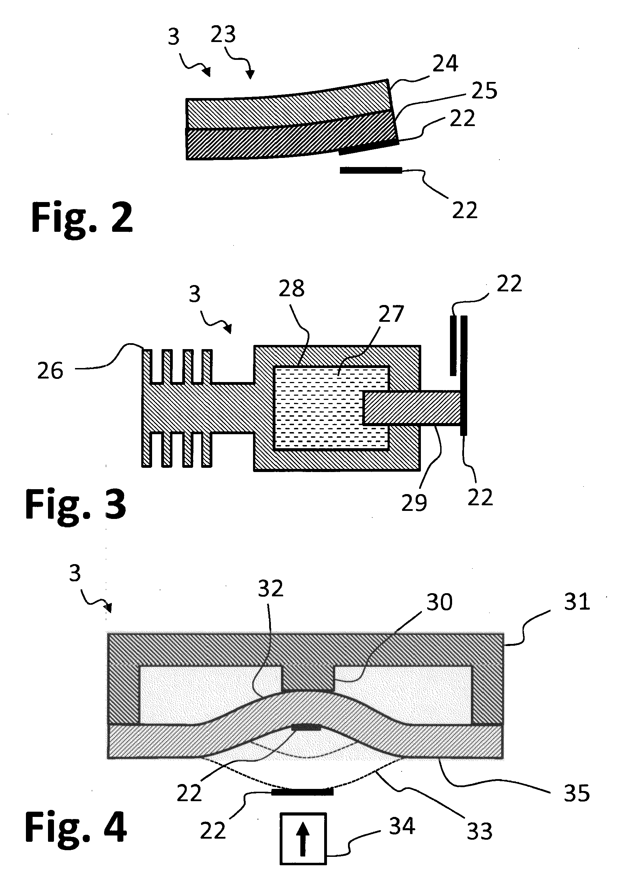

Fig. 2 zeigt einen für das beschriebene Verfahren geeigneten Schalter 3, der als Bimetall-Schalter 23 ausgebildet ist. Dieser Bimetall-Schalter 23 besteht aus einem ersten Metall 24 und einem zweiten Metall 25, die fest miteinander verbunden sind. Das erste Metall 24 und das zweite Metall 25 haben unterschiedliche Wärmeausdehnungskoeffizienten. Daher verformt sich der Bimetall-Schalter, wenn die Temperatur sich verändert. Der Bimetall-Schalter 23 ist so ausgelegt, dass die elektrischen Kontakte 22 sich berühren, wenn eine Grenztemperatur erreicht ist, um eine elektrische Verbindung 2 herzustellen.

Fig. 3 zeigt einen für das beschriebene Verfahren geeigneten Schalter 3, der mit Hilfe einer Flüssigkeit (eines Ausdehnungsfluids 27) funktioniert. Der Schalter 3 weist ein Reservoir 28 auf, welches mit dem Ausdehnungsfluid 27 gefüllt ist. Damit die Temperatur der Umgebung effektiv zu dem Ausdehnungsfluid 27 gelangt, weist der Schalter 3 auch einen Temperaturaufnahmekörper 26 zur Aufnahme der Umgebungstemperatur und zur Weitergabe der Umgebungstemperatur an das Ausdehnungsfluid 27 auf. Das Ausdehnungsfluid 27 steht in Verbindung zu einem Kolben 29. Wenn die Temperatur des Ausdehnungsfluids 27 abnimmt oder zunimmt, verschiebt sich der Kolben 29. Wenn eine Grenztemperatur erreicht ist, ist der Kolben 29 derart verschoben, dass die elektrischen Kontakte 22 sich berühren und eine elektrische Verbindung hergestellt ist.

Fig. 4 zeigt einen für das beschriebene Verfahren geeigneten (mechanisch) vorgespannten Schalter 3. Dieser Schalter 3 weist ein Ausdehnungsmaterial 35 auf, welches beispielsweise ein Metall ist und welches sich in Abhängigkeit der Umgebungstemperatur verlängert bzw. verkürzt. Das Ausdehnungsmaterial 35 ist in einem Rahmen 31 montiert und befindet sich in einer ersten Position 32, in welcher es gegen einen Anschlag 30 vorgespannt ist. Das in Fig. 4 dargestellte Ausdehnungsmaterial 35 dehnt sich vorzugsweise dann aus, wenn die Umgebungstemperatur abfällt. Bei Erreichen einer Grenztemperatur hat sich das Ausdehnungsmaterial 35 so weit ausgedehnt, dass es von der ersten Position 32 in eine zweite Position 33 umklappt. Dann wird eine elektrische Verbindung zwischen den beiden elektrischen Kontakten 22 hergestellt. Vorzugsweise ist auch noch ein Aktor 34 vorgesehen, mit welchem das Ausdehnungsmaterial 35 aktiv wieder in die erste Position 32 zurück versetzt werden kann.

### Bezugszeichenliste

- 1: Fördereinheit
- 2: elektrische Verbindung
- 3: Schalter
- 4: Steuergerät
- 5: Temperatursensor
- 6: Speicher
- 7: Tank
- 8: Verbrennungskraftmaschine
- 9: Förderleitung
- 10: Pumpe
- 11: Kraftfahrzeug
- 12: Abgasbehandlungsvorrichtung
- 13: Zufuhrvorrichtung
- 14: SCR-Katalysator
- 15: Versorgung
- 16: Steuerleitung
- 17: Entnahmestelle
- 18: Förderrichtung
- 19: Deaktivierungsschalter
- 20: Deaktivierungsleitung
- 21: Überbrückung
- 22: elektrischer Kontakt
- 23: Bimetall-Schalter
- 24: erstes Metall
- 25: zweites Metall
- 26: Temperaturaufnahmekörper
- 27: Ausdehnungsfluid
- 28: Reservoir
- 29: Kolben
- 30: Anschlag
- 31: Rahmen
- 32: erste Position
- 33: zweite Position
- 34: Aktor
- 35: Ausdehnungmaterial

## Patentansprüche

1. Verfahren zum Entleeren einer Fördereinheit (1) für flüssiges Additiv, aufweisend zumindest die folgenden Schritte:
a) Herstellen einer elektrischen Verbindung (2) mit Hilfe eines stromlosen Schalters (3), der dazu eingerichtet ist, eine elektrische Verbindung (2) herzustellen, wenn eine Temperatur eine Grenztemperatur unterschreitet; und
b) Entleeren der Fördereinheit (1), wenn in Schritt a) die elektrische Verbindung (2) hergestellt wurde.

2. Verfahren nach Patentanspruch 1, wobei durch den Schalter (3) in Schritt a) ein Steuergerät (4) aktiviert wird, wobei das Steuergerät die Entleerung in Schritt b) steuert.

3. Verfahren nach Patentanspruch 2, wobei sich das Steuergerät (4) nach der Durchführung des Verfahrens automatisch deaktiviert.

4. Verfahren nach einem der vorhergehenden Patentansprüche, wobei zwischen Schritt a) und Schritt b) mit einem Temperatursensor (5) eine Temperaturmessung durchgeführt wird, um zu überprüfen, ob eine Grenztemperatur tatsächlich unterschritten ist, und das flüssige Additiv aus der Fördereinheit (1) in Schritt b) nur entfernt wird, wenn die Grenztemperatur tatsächlich unterschritten ist.

5. Verfahren nach einem der vorhergehenden Patentansprüche, wobei nach Schritt b) in einem Speicher (6) hinterlegt wird, dass die Fördereinheit entleert ist und vor Schritt a) und/oder nach Schritt a) anhand der Information in dem Speicher (6) überprüft wird, ob das System bereits entleert ist und zumindest der Schritt b) nur durchgeführt wird, wenn das System nicht entleert ist.

6. Verfahren nach einem der vorhergehenden Patentansprüche, wobei die Fördereinheit (19 durch Rücksaugen des flüssigen Additivs zurück in einem Tank (7) entleert wird.

7. Verfahren nach einem der vorhergehenden Patentansprüche, wobei der Schalter (3) zumindest ein Schalter (3) aus der folgenden Gruppe ist:
- ein Bimetall-Schalter,
- ein Schalter (3) umfassend eine Formgedächtnislegierung,
- ein Temperaturschalter mit einer Flüssigkeit, und
- ein vorgespannter Schalter.

8. Verfahren nach einem der vorhergehenden Patentansprüche, wobei das Verfahren während einer Stillstandphase einer Verbrennungskraftmaschine (8) durchgeführt wird.

9. Fördereinheit (1) zur Förderung eines flüssigen Additivs, aufweisend eine Förderleitung (9) und eine Pumpe (10), wobei die Pumpe (10) dazu eingerichtet ist, flüssiges Additiv durch die Förderleitung (9) aus einem Tank (7) zu fördern, und die Pumpe (10) oder eine separate Pumpe dazu eingerichtet ist, die Fördereinheit (1) durch Rücksaugen zu entleeren, sowie einen stromlos aktivierbarer Schalter (3), welcher eine elektrische Verbindung herstellt, wenn eine Grenztemperatur unterschritten wird, um die Pumpe zum Entleeren der Fördereinheit (1) zu aktivieren.

10. Kraftfahrzeug (11), aufweisend eine Verbrennungskraftmaschine (8) und eine Abgasbehandlungsvorrichtung (12) zur Reinigung der Abgase der Verbrennungskraftmaschine (8) sowie eine Fördereinheit (1) nach Patentanspruch 9.

## Claims

1. Method for evacuating a delivery unit (1) for liquid additive, having at least the following steps:
a) producing an electrical connection (2) by means of a currentless switch (3) which is designed to produce an electrical connection (2) when a temperature falls below a threshold temperature; and
b) evacuating the delivery unit (1) when, in step a), the electrical connection (2) has been produced.

2. Method according to Patent Claim 1, wherein a control unit (4) is activated by means of the switch (3) in step a), wherein the control unit controls the evacuation in step b).

3. Method according to Patent Claim 2, wherein the control unit (4) automatically deactivates after the execution of the method.

4. Method according to one of the preceding patent claims, wherein, between step a) and step c), a temperature measurement is performed by means of a temperature sensor (5) in order to check whether a threshold temperature has actually been undershot, and the liquid additive is removed from the delivery unit (1) in step b) only if the threshold temperature has actually been undershot.

5. Method according to one of the preceding patent claims, wherein, after step b), it is stored in a memory (6) that the delivery unit has been evacuated, and before step a) and/or after step a), it is checked on the basis of the information in the memory (6) whether the system has already been evacuated, and at least step b) is carried out only when the system has not been evacuated.

6. Method according to one of the preceding patent claims, wherein the delivery unit (1) is evacuated by back-suction of the liquid additive back into a tank (7).

7. Method according to one of the preceding patent claims, wherein the switch (3) is at least a switch (3) from the following group:
- a bimetal switch,
- a switch (3) comprising a shape memory alloy,
- a temperature switch with a liquid, and
- a prestressed switch.

8. Method according to one of the preceding patent claims, wherein the method is executed during a standstill phase of an internal combustion engine (8).

9. Delivery unit (1) for delivering a liquid additive, having a delivery line (9) and having a pump (10), wherein the pump (10) is designed to deliver liquid additive through the delivery line (9) from a tank (7), and the pump (10) or a separate pump is designed to evacuate the delivery unit (1) by back-suction, and a currentlessly activatable switch (3) which produces an electrical connection when a threshold temperature is undershot, in order to activate the pump to evacuate the delivery unit (1).

10. Motor vehicle (11), having an internal combustion engine (8) and having an exhaust-gas treatment device (12) for the purification of the exhaust gases of the internal combustion engine (8), and also having a delivery unit (1) according to Patent Claim 9.

## Revendications

1. Procédé pour vider une unité transporteuse (1) destinée à un additif liquide, comportant au moins les étapes consistant à :
a) établir une liaison électrique (2) à l'aide d'un commutateur sans courant (3) qui est conçu pour établir une liaison électrique (2) lorsqu'une température s'abaisse en-dessous d'une température limite ; et
b) vider l'unité transporteuse (1) lorsque la liaison électrique (2) a été établie lors de l'étape a).

2. Procédé selon la revendication 1, dans lequel un appareil de commande (4) est activé par l'intermédiaire du commutateur (3) lors de l'étape a), dans lequel l'appareil de commande commande le vidage lors de l'étape b).

3. Procédé selon la revendication 2, dans lequel l'appareil de commande (4) se désactive automatiquement après la mise en oeuvre du procédé.

4. Procédé selon l'une quelconque des revendications précédentes, dans lequel une mesure de température est effectuée entre l'étape a) et l'étape b) au moyen d'un capteur de température (5) afin de vérifier s'il se produit effectivement un abaissement en-dessous d'une température limite, et pour n'expulser l'additif liquide de l'unité transporteuse (1) lors de l'étape b) que lorsqu'il se produit effectivement un abaissement en-dessous de la température limite.

5. Procédé selon l'une quelconque des revendications précédentes, dans lequel, après l'étape b), on stocke dans une mémoire (6) le fait que l'unité transporteuse est vidée et avant l'étape a) et/ou après l'étape a), il est vérifié, sur la base de l'information contenue dans la mémoire (6), si le système est déjà vidé et au moins l'étape b) n'est effectuée que lorsque le système n'est pas vidé.

6. Procédé selon l'une quelconque des revendications précédentes, dans lequel l'unité transporteuse (19) est vidée par réaspiration de l'additif liquide dans un réservoir (7).

7. Procédé selon l'une quelconque des revendications précédentes, dans lequel le commutateur (3) est au moins un commutateur (3) appartenant au groupe suivant :
- un commutateur à bilame,
- un commutateur (3) comprenant un alliage à mémoire de forme,
- un commutateur thermique comportant un liquide, et
- un commutateur précontraint.

8. Procédé selon l'une quelconque des revendications précédentes, dans lequel le procédé est mis en oeuvre pendant une phase d'arrêt d'un moteur à combustion interne (8).

9. Unité transporteuse (1) destinée à transporter un additif liquide, comportant une conduite de transport (9) et une pompe (10), dans lequel la pompe (10) est conçue pour transporter un additif liquide par l'intermédiaire de la conduite de transport (9) depuis un réservoir (7), et la pompe (10) ou une pompe séparée est conçue pour vider l'unité transporteuse (1) par réaspiration, ainsi qu'un commutateur (3) pouvant être activé sans courant qui établit une liaison électrique lors de l'abaissement en-dessous d'une température limite pour activer la pompe afin de vider l'unité transporteuse (1).

10. Véhicule automobile (11) comportant un moteur à combustion interne (8) et un dispositif de traitement des gaz d'échappement (12) destiné à nettoyer les gaz d'échappement du moteur à combustion interne (8), ainsi qu'une unité transporteuse (1) selon la revendication 9.
